# EUROPEAN PATENT SPECIFICATION

(11) **EP 4 425 206 B1**
(45) Date of publication and mention of the grant of the patent: **04.06.2025**
(21) Application number: 23158910.2
(22) Date of filing: 28.02.2023
(51) Int. Cl.: H04W 4/38, H04W 16/14, H04W 64/00, G01S 7/00, G01S 13/931

(54) **METHOD FOR PROVIDING AT LEAST ONE SENSING-RELATED SERVICE BY MEANS OF PROCESSING SENSING-RELATED DATA THAT IS GENERATED WITHIN OR AS PART OF A MOBILE COMMUNICATION NETWORK, SYSTEM OF MOBILE COMMUNICATION NETWORK, SENSING EDGE SERVER OR SENSING APPLICATION SERVER OR SENSING-CAPABLE OR SENSING-ENABLED ENTITY OR FUNCTIONALITY, PROGRAM AND COMPUTER-READABLE MEDIUM**
VERFAHREN ZUM BEREITSTELLEN MINDESTENS EINES SENSING-RELEVANTER DIENSTES
SERVEUR DE BORD DE DÉTECTION OU D'APPLICATION DE DÉTECTION

(43) Date of publication of application: 04.09.2024
(73) Proprietor: Deutsche Telekom AG, 53113 Bonn (DE)
(72) Inventor: KADELKA, Arndt, Dr., 50933 Cologne (DE)
(74) Representative: Schwöbel, Thilo K.

(56) References cited:
- WO-A1-2020/064121
- FAN LIU ET AL: "Integrated Sensing and Communications: Towards Dual-functional Wireless Networks for 6G and Beyond", ARXIV.ORG, CORNELL UNIVERSITY LIBRARY, 201 OLIN LIBRARY CORNELL UNIVERSITY ITHACA, NY 14853, 16 August 2021 (2021-08-16), XP091034500
- FRANCESCA MENEGHELLO ET AL: "Towards Integrated Sensing and Communications in IEEE 802.11bf Wi-Fi Networks", ARXIV.ORG, CORNELL UNIVERSITY LIBRARY, 201 OLIN LIBRARY CORNELL UNIVERSITY ITHACA, NY 14853, 28 December 2022 (2022-12-28), XP091403912

## Description

### BACKGROUND

The present invention relates a method for providing at least one sensing-related service by means of processing sensing-related data that is generated within or as part of a mobile communication network, wherein the mobile communication network comprises at least a first sensing-capable or sensing-enabled entity or functionality and a second sensing-capable or sensing-enabled entity or functionality, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality, wherein by means of the radiofrequency sensing reception signal information about the environment of the first and/or second sensing-capable or sensing-enabled entities or functionalities is able to be gathered as first stage sensing inference data.

Furthermore, the present invention relates to a system or a mobile communication network for providing at least one sensing-related service by means of processing sensing-related data that is generated within or as part of a mobile communication network, wherein the mobile communication network comprises at least a first sensing-capable or sensing-enabled entity or functionality and a second sensing-capable or sensing-enabled entity or functionality, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality, wherein by means of the radiofrequency sensing reception signal information about the environment of the first and/or second sensing-capable or sensing-enabled entities or functionalities is able to be gathered as first stage sensing inference data.

Additionally, the present invention relates to a sensing edge server or to a sensing application server or to a sensing-capable or sensing-enabled entity or functionality, especially as part of an inventive system or an inventive mobile communication network, for providing at least one sensing-related service by means of processing sensing-related data that is generated within or as part of a mobile communication network.

Furthermore, the present invention relates to a program and to a computer-readable medium for providing at least one sensing-related service by means of processing sensing-related data that is generated within or as part of a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

Wireless sensing technologies have originated from the most widely used sensing technology known as radar (radio detection and ranging), where radio waves are exploited to determine distance, angle, or instantaneous velocity of objects. Nowadays, this principle is exploited for example by lidar (light detection and ranging) systems that are capable of obtaining an image of the environment around a sensor. A lidar system may be either a stand-alone device or integrated in a mobile device or a vehicle.

By means of realizing sensing capabilities in or as part of mobile communication networks, primarily by means of one or a plurality of sensing-capable or sensing-enabled entities or functionalities that are generating and transmitting radiofrequency sensing signals, it is possible to obtain information regarding either transmission channel properties between different stations, especially base station entities or user equipments, and/or regarding objects from where such radiofrequency sensing signals are reflected.

Even though such sensing capabilities are able to procure further information regarding transmission channels and/or objects, especially moving objects, nearby or in the vicinity of the respective sensing-capable or sensing-enabled entities or functionalities, mobile radio technologies (mobile radio access technologies) and radar have developed over decades more or less independently. However, lately the convergence of both technologies is increasing: Future advances in mobile communications (5G Advanced and 6G) anticipate that advanced radio sensing functions will become important services of mobile broadband (radio) networks. Joint communication and sensing (JCaS) will address a combined radio interface serving both, communication and sensing. Sensing in 6G is considered in an even broader range, especially referring to the ability of devices (e.g. base station entities or user equipments) to detect and gather information about the environment around them. This could include using advanced sensor technologies to gather information about the physical world, or using machine learning algorithms to analyze data from one or multiple sensors in real-time. Furthermore, for 6G, integrated communication and sensing (ICaS) is considered that improves the JCaS concept by providing common waveforms and other radio functions. An initial step for the introduction of sensing is currently under preparation for 3GPP Rel-19, providing sensing functionalities on top of 5G radio for identified use cases.

Typically, wireless sensing technologies are applied in stand-alone systems that are designed for dedicated applications and use cases, e.g. autonomous driving, and a lot of research and development work has been conducted to develop methods and algorithms for problems arising in connection with these specific applications or use cases. In contrast to these rather specific sensing applications, sensing in cellular mobile broadband networks typically needs to serve diverse use cases.

Document WO 2020064121 discloses spatiotemporal sensor data from the sensors, and forwarding it to e.g. edge servers for further processing, and further forwarding the processed data to application servers.

### SUMMARY

An object of the present invention is to provide a technically simple, effective and cost-effective solution for providing at least one sensing-related service by means of processing sensing-related data that is generated within or as part of a mobile communication network, wherein the mobile communication network comprises at least a first sensing-capable or sensing-enabled entity or functionality and a second sensing-capable or sensing-enabled entity or functionality, wherein the at least one sensing-capable or sensing-enabled entity or functionality transmits a radiofrequency sensing signal, wherein, as a result of the radiofrequency sensing signal being transmitted, a radiofrequency sensing reception signal is received by either the first sensing-capable or sensing-enabled entity or functionality or the second sensing-capable or sensing-enabled entity or functionality, wherein by means of the radiofrequency sensing reception signal information about the environment of the first and/or second sensing-capable or sensing-enabled entities or functionalities is able to be gathered as first stage sensing inference data, wherein a more general applicability and less use case-specific or application-specific usage of the sensing inference data is possible. A further object of the present invention is to provide a corresponding system or mobile communication network, a corresponding sensing edge server or a corresponding sensing application server or a corresponding sensing-capable or sensing-enabled entity or functionality, and a corresponding program and computer-readable medium.

The object of the present invention is achieved by a method for providing at least one sensing-related service by means of processing sensing-related data according to claim 1.

It is thereby advantageously possible according to the present invention to provide for a cascading of data inference from integrated communication and sensing in cellular mobile broadband networks. Hence, in contrast to the rather specific conventionally known sensing applications, applying sensing in cellular mobile broadband networks according to the present invention advantageously provides the possibility to serve diverse use cases, and, additionally or cumulatively, apply a service oriented architecture such as used in mobile broadband (cellular) networks. Hence, according to the present invention, instead of optimizing and aggregating sensing (raw) data for specific use cases and/or stand-alone applications, it is advantageously possible to provide sensing services in mobile broadband (cellular) networks that provide functions and internal services that serve multiple - and diverse - use cases whilst building on a cellular system architecture. According to the present invention, it is advantageously possible to serve various application demands, which is a benefit due to the large variety of potential sensing use cases.

With regard to positioning, it is to be understood that in this respect, integrated communication and sensing (ICaS) significantly differs from positioning in mobile broadband networks, as the sensing targets are not actively involved in the inference process; hence, algorithms defined for positioning cannot be applied to sensing, and - while, in principle, every object in the environment can be a sensing target (i.e. a sensed object) - in case of positioning, targets are defined only by the positioning capabilities of the co-located user equipments. Furthermore, a sensing object can be defined by much more features than only the location information (as it is the case of positioning). Furthermore, user equipment detection/identification/tracking are inherently part of a positioning solution (since user equipments are "known" to the system); however, in a sensing approach, this information is not given a priori, it is typically needed to be "learned" from the measured data.

Integrated communication and sensing, ICaS, base station entities and user equipments (i.e. sensing-capable or sensing-enabled entities or functionalities) have to serve both, communication and sensing. Due to the extra processing needs to infer by these sensing features and applications, it is advantageously possible according to the present invention that especially base station entities - but also user equipments - are relaxed from these application-driven tasks. In this sense, it is proposed, according to the present invention, to split the sensing inference accordingly, and to apply, or to provide for, a cascading of data inference from integrated communication and sensing in cellular mobile broadband networks.

In conventionally known mobile communication networks, several sensing-related use cases are at least contemplated. This includes, e.g., the following: intruder detection in smart home, pedestrian and/or animal intrusion detection on a highway, intruder detection in surroundings of smart home, sensing for railway intrusion detection, automated guided vehicles, AGV, detection and tracking in factories, unmanned aerial vehicle, UAV, flight trajectory tracing, sensing at crossroads with/without obstacle, sensing to avoid unmanned aerial vehicle collision, sensing for unmanned aerial vehicle intrusion detection, sensing for tourist spot traffic management, unmanned aerial vehicle or vehicle or pedestrian detection near smart grid equipment, autonomous mobile robot, AMR, collision avoidance in smart factories.

All of these use cases use one or more of: object recognition and detection, object localization and/or object tracking. In contrast to localization technologies, sensing services operate with passive objects. Passive radio measurements of one or many receivers allow to infer sensing data. Thereby, improved radio capabilities such as massive multiple input multiple output, MIMO, are applied. With higher frequencies and increased bandwidths, the sensing performance (accuracies, resolutions) is increased, antenna sizes will be able to be reduced.

According to the present invention, at least one sensing-related service is able to be provided, by means of processing sensing-related data that is generated within a mobile communication network, i.e. wherein at least a part or parts of the mobile communication network help to generate such sensing-related data.

According to the present invention, this is able to be realized by means of at least a first sensing-capable or sensing-enabled entity or functionality and a second sensing-capable or sensing-enabled entity or functionality. These sensing-capable or sensing-enabled entities or functionalities are typically base station entities that are used, within or as part of the mobile communication network, for communication purposes, i.e. in order to provide communication services to user equipments. However, also user equipments might be used, or participate, according to the present invention, in generating sensing-related data; hence, sensing-capable or sensing-enabled entities or functionalities might also correspond to user equipments.

According to the present invention, sensing relates to obtaining information regarding the environment of such a sensing-capable or sensing-enabled entity or functionality by means of using (and analyzing) incoming radiofrequency signals (sensing reception signals) that are the result of the interactions (especially reflections) of previously transmitted radiofrequency signals (sensing signals) with the environment (e.g. objects having the capability to reflect radiofrequency signals) of the sensing-capable or sensing-enabled entity or functionality, wherein the previously transmitted radiofrequency signals (sensing signals) could either be radiofrequency signals having been transmitted by the same sensing-capable or sensing-enabled entity or functionality, or radiofrequency signals (sensing signals) having been transmitted by another sensing-capable or sensing-enabled entity or functionality, or both. Hence, the at least one sensing-capable or sensing-enabled entity or functionality transmits a radiofrequency sensing signal, wherein, as a result of the radiofrequency sensing signal being transmitted, a radiofrequency sensing reception signal is received by either the (same) first sensing-capable or sensing-enabled entity or functionality or the second sensing-capable or sensing-enabled entity or functionality (or by both of them). By means of the radiofrequency sensing reception signal (or plurality of such sensing reception signals) - information is able to be gathered (especially by means of at least initially processing such sensing reception signal(s)) about the environment of the first and/or second sensing-capable or sensing-enabled entities or functionalities; in the context of the present invention, such information are referred to as first stage sensing inference data.

In addition to the sensing-capable or sensing-enabled entities or functionalities, the mobile communication network comprises or is associated or assigned to, according to the present invention, at least one sensing edge server and at least one sensing application server in order to further process sensing-related data, and especially the first stage sensing inference data provided by the sensing-related or sensing-enabled entities or functionalities .Hence, according to the present invention, in order to provide at least one sensing-related service, the method comprises the steps of:
-- the first stage sensing inference data being provided (or transmitted, by the respective sensing-capable or sensing-enabled entity or functionality) to the at least one sensing edge server, wherein the at least one sensing edge server generates second stage sensing inference data, and furthermore ,
-- the second stage sensing inference data being provided to the at least one sensing application server for providing sensing-related services and/or for generating sensing application data.

According to the present invention, it is advantageously possible and preferred that the first and second sensing-capable or sensing-enabled entities or functionalities use sensing raw data, especially based on radiofrequency transmission and/or reception measurements, especially time-of-arrival data, ToA data, angle-of-arrival data, AoA data, angle-of-departure data, AoD data, and/or doppler data, especially from the various beams of at least one massive multiple input multiple output, MIMO, antenna entity or functionality, wherein especially the first and second sensing-capable or sensing-enabled entities or functionalities are used for integrated communication and sensing, ICaS, and/or for joint communication and sensing, JCaS capabilities, and especially serve both communication purposes and sensing purposes.

It is thereby advantageously possible to easily and effectively implement the inventive method.

According to the present invention, it is furthermore advantageously possible and preferred that the first stage sensing inference data comprise at least one out of the following:
-- radar-like images, especially in a relative coordinate system,
-- elements with significant sensing information,
-- further information available during local analysis at the first and second sensing-capable or sensing-enabled entities or functionalities, especially velocity indications, especially inferred from doppler measurements, range resolution, angular resolution, channel observations,
-- time-sequencing of static images, especially time-stamped image streams, especially of radar-like images,
-- a vector of features regarding at least a part of the radar-like images, the vector of features especially comprising data regarding
   -- the intensity of the received signal,
   -- the relative velocity derived from doppler measurements and/or
   -- a self-assessment information regarding one or a plurality of the inferred properties based on the respective sensing-capable or sensing-enabled entity or functionality.

It is thereby advantageously possible to easily and effectively implement the inventive method.

According to a further possibility in the context of the present invention, in a first sub-step of the first step, the sensing edge server performs a first inference step, and wherein, in a second sub-step of the first step, the sensing edge server performs a second inference step, wherein the second stage sensing inference data correspond to the result of the second inference step,
wherein especially, the first inference step involves transforming the sensing inference data into a general coordinate system or in an absolute coordinate system, especially transformed from local information into the general coordinate system or into the absolute coordinate system,
wherein especially, the second inference step involves the sensing edge server identifying objects and providing object information, especially defined data on object level, especially in a defined format, preferably using JavaScript Object Notation, JSON.

It is thereby advantageously possible to easily and effectively implement the inventive method.

Furthermore, according to still a further possibility in the context of the present invention, the second stage sensing inference data are generated by means of at least one out of the following:
-- receiving different first stage sensing inference data or streams of first stage sensing inference data,
-- data fusion of different first stage sensing inference data provided by different sensing-capable or sensing-enabled entities or functionalities, especially data fusion into the general coordinate system or into the absolute coordinate system,
-- model inference and/or artificial intelligence-based or machine learning-based inference such as to derive results on:
   -- object detection,
   -- object identification, especially the shape, the material and/or the body of the object,
   -- object localization, especially in the absolute coordinate system,
   -- object tracking,
   -- environment information, especially regarding buildings or plants,
wherein especially, the second stage sensing inference data comprise a generalized granularity.

It is thereby advantageously possible to easily and effectively implement the inventive method.

Furthermore, it is advantageously possible and preferred according to the present invention that the first stage sensing inference data are transmitted, by the different sensing-capable or sensing-enabled entities or functionalities, and received, by the sensing edge server involving or according to at least one out of the following:
-- a continuous mode, wherein the sensing-capable or sensing-enabled entities or functionalities almost continuously provide streams of first stage sensing inference data, and the sensing edge server is almost continuously able to update object information,
-- a periodic mode, wherein the sensing edge server periodically updates the sensing information, wherein the periodicity is especially negotiated between the sensing-capable or sensing-enabled entities or functionalities and the sensing edge server,
-- a one-shot request, wherein the sensing edge server requests one-time sensing information from the sensing-capable or sensing-enabled entities or functionalities.

It is thereby advantageously possible to easily and effectively implement the inventive method.

According to a further preferred embodiment of the present invention, the second stage sensing inference data are transmitted, by the sensing edge server, and received, by the sensing application server,
involving an application programming interface, especially according to at least one out of the following:
-- a representational state transfer, REST, application programming interface, especially in case that the sensing edge server requests one-time sensing information from the sensing-capable or sensing-enabled entities or functionalities,
-- a publication-subscription application programming interface, especially using WebSocket, MQ telemetry transport, MQTT, especially in case that the sensing edge server and the sensing-capable or sensing-enabled entities or functionalities communicate according to the periodic mode operation,
-- a stream-based application programming interface, especially in case that the sensing edge server and the sensing-capable or sensing-enabled entities or functionalities communicate according to the continuous mode operation.

Furthermore, the present invention relates to a system or to a telecommunications network according to claim 8.

Furthermore, the present invention relates to a sensing edge server according to claim 9.

Additionally, the present invention relates to a program comprising a computer readable program code according to claim 10.

Additionally, the present invention relates to a computer-readable medium according to claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

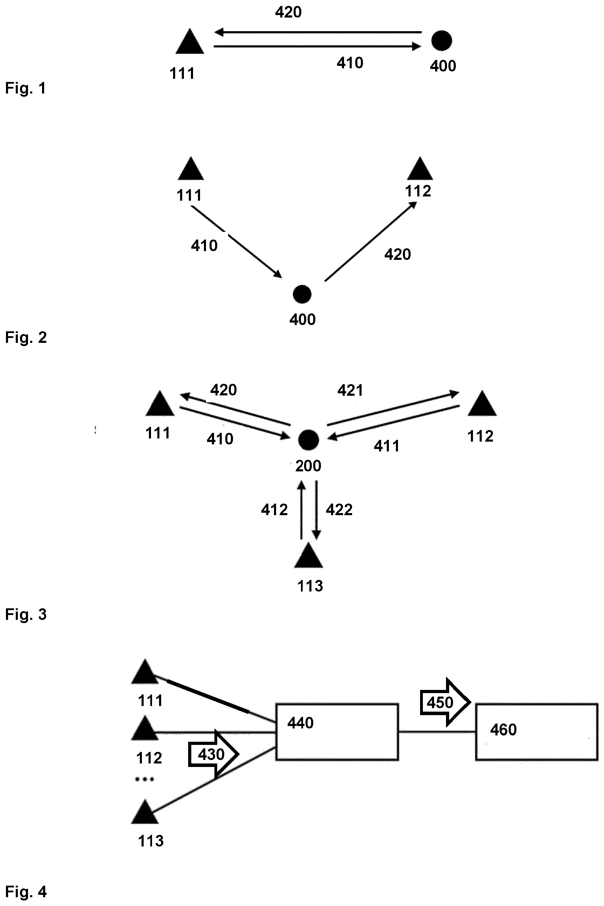

Figure 1 schematically and exemplarily illustrates a base station as a sensing-capable or sensing-enabled entity or functionality which transmits signals (a radiofrequency sensing signals) and receives the reflected signals (radiofrequency sensing reception signals), the echos, of a target in a mono-static operation scenario.
Figure 2 schematically and exemplarily illustrates a bi-static operation scenario, where a target is illuminated (i.e. radiofrequency sensing signals sent) by a first base station entity as a first sensing-capable or sensing-enabled entity or functionality and (radiofrequency sensing reception signals) detected by a second base station entity as a second sensing-capable or sensing-enabled entity or functionality.
Figure 3 schematically and exemplarily illustrates a situation, where a target is illuminated (i.e. radiofrequency sensing signals sent) and (radiofrequency sensing reception signals) detected, respectively, by a first, second and third base station entity as a first, second and third sensing-capable or sensing-enabled entity or functionality
Figure 4 schematically and exemplarily illustrates the method according to the present invention as well as functional elements involved, namely, besides first, second and third sensing-capable or sensing-enabled entities or functionalities, a sensing edge server, processing first stage sensing inference data received from one or more of the sensing-capable or sensing-enabled entities or functionalities, and a sensing application server providing sensing-related services and/or generating sensing application data based on second stage sensing inference data received from the sensing edge server or from a plurality of sensing edge servers.

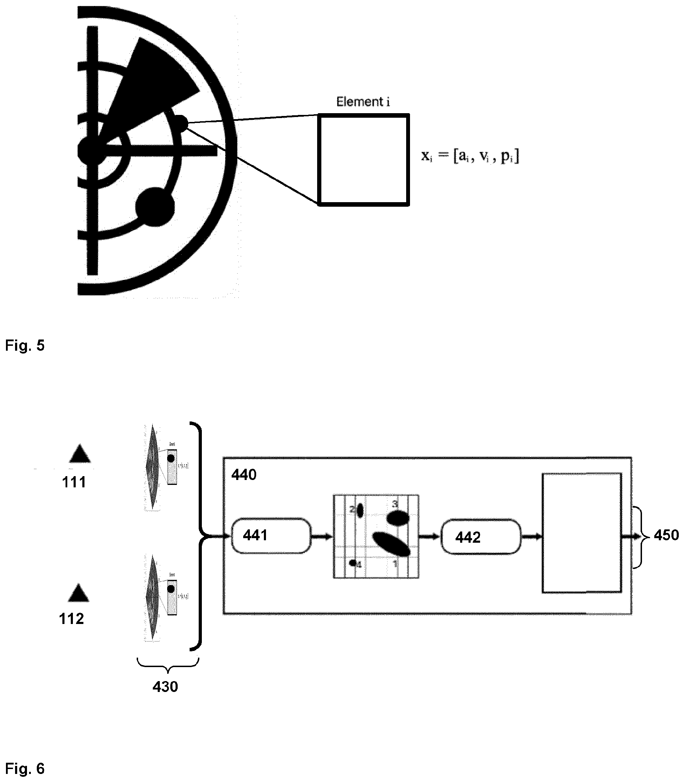

Figure 5 schematically and exemplarily illustrates a possibility of first stage sensing inference data, especially as a radar-like image having multiple targets, wherein a data element is exemplarily represented as a feature vector.
Figure 6 schematically and exemplarily illustrates inference steps performed in the sensing edge server.

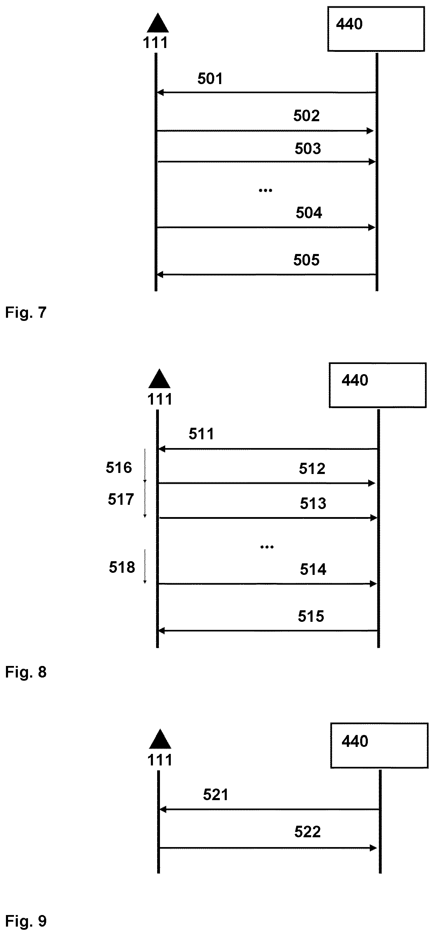

Figures 7, 8 and 9 schematically and exemplarily illustrate different examples of the information exchange between a sensing edge server and a sensing-capable or sensing-enabled entity or functionality, when the first requests from the latter continuous mode, periodic mode and one-shot request, respectively.

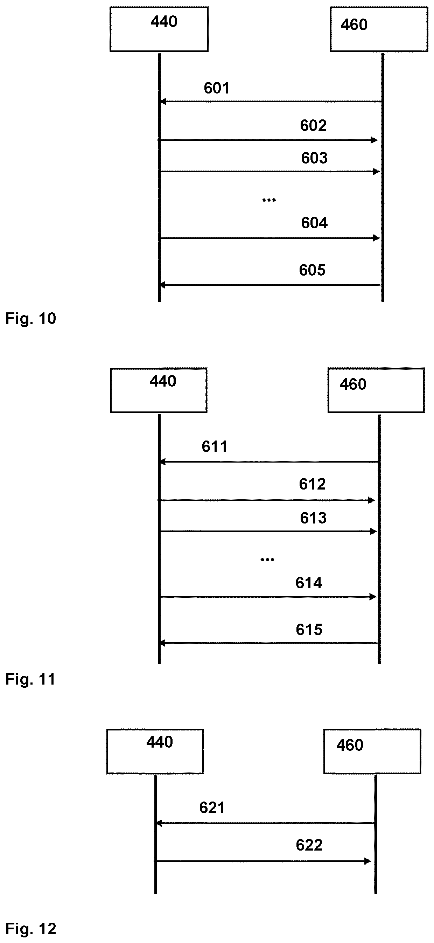

Figures 10, 11 and 12 schematically and exemplarily illustrate different examples of the information exchange and the interface between a sensing edge server towards the sensing application server, showing different approaches, especially Stream-based application programming interface, Pub/Sub application programming interface, and REST application programming interface, respectively.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a base station entity as a (first) sensing-capable or sensing-enabled entity or functionality 111 is schematically and exemplarily represented, which (first) sensing-capable or sensing-enabled entity or functionality 111 transmits signals (a radiofrequency sensing signals 410) and receives the reflected signals (a radiofrequency sensing reception signals 420), the echoes, of a target 400 in a mono-static sensing operation scenario.

In Figure 2, a bi-static operation scenario is schematically and exemplarily shown, where a target 400 is illuminated - i.e. radiofrequency sensing signals 410 sent - by a first base station entity as a first sensing-capable or sensing-enabled entity or functionality 111 and radiofrequency sensing reception signals 420 (resulting from the radiofrequency sensing signals 410) detected by a second base station entity as a second sensing-capable or sensing-enabled entity or functionality 112.

In Figure 3, a situation is schematically and exemplarily represented, where a target 400 is illuminated (i.e. radiofrequency sensing signals sent) and (radiofrequency sensing reception signals) detected, respectively, by a first, second and third base station entity as first, second and third sensing-capable or sensing-enabled entities or functionalities 111, 112, 113 (i.e. Figure 3 depicts mono-static sensing of three base stations 111, 112, 113). The first sensing-capable or sensing-enabled entity or functionality 111 sends, or transmits, a first radiofrequency sensing signal 410 and receives - as a result thereof - a first radiofrequency sensing reception signal 420. The second sensing-capable or sensing-enabled entity or functionality 112 sends, or transmits, a second radiofrequency sensing signal 411 and receives - as a result thereof - a second radiofrequency sensing reception signal 421. The third sensing-capable or sensing-enabled entity or functionality 113 sends, or transmits, a third radiofrequency sensing signal 412 and receives - as a result thereof - a third radiofrequency sensing reception signal 422. Furthermore, it is conceivable that, especially depending on the respective timing of the first, second and third radiofrequency sensing signals 410, 411, 412, e.g., the first radiofrequency sensing reception signal 420 is a result, especially besides the first radiofrequency sensing signal 410, of at least one of the second and third radiofrequency sensing signals 411, 412, and analogously for the other radiofrequency sensing reception signals 421, 422.

Typically, in mono-static operation - cf. Figure 1 -, the transmitter (of radiofrequency sensing signals 410, 411, 412) and the receiver (of radiofrequency sensing reception signals 420, 421, 422) are co-located in the sensing-capable or sensing-enabled entities or functionalities 111, 112, 113 (i.e., typically base station entities and/or user equipments), respectively, especially with full-duplex capability. The measurements of ToA (Time-of-Arrival), AoA (Angle-of-Arrival), AoD (Angle-of-Departure), and Doppler of each of the resolved (radiofrequency signal propagation) paths correspond to the detection of a target 400, where the location is relative to the coordinate system of the sensing-capable or sensing-enabled entities or functionalities 111, 112, 113 (i.e., typically base station entities and/or user equipments), respectively.

In contrast to mono-static operation, in bi/multi-static operation - cf. Figure 2 and also Figure 3 -, the transmitter (of radiofrequency sensing signals 410, 411, 412) and the receiver (of radiofrequency sensing reception signals 420, 421, 422) are located at different sites, i.e. a (radiofrequency sensing) signal between two sensing-capable or sensing-enabled entities or functionalities such as a base station entity and a user equipment, such signal to the user equipment is able to be used to estimate ToA, AoA, AoD, and Doppler of each of the resolved (radiofrequency signal propagation) paths. In case the two sensing-capable or sensing-enabled entities or functionalities rather correspond to two base station entities, the targets are detected, and their location estimated especially in an absolute joint coordinate system of these base station entities.

In Figure 4, the method according to the present invention is schematically and exemplarily shown. Furthermore, functional elements involved, namely, besides first, second and third sensing-capable or sensing-enabled entities or functionalities 111, 112, 113, a sensing edge server 440, processing first stage sensing inference data 430 received from one or more of the sensing-capable or sensing-enabled entities or functionalities 111, 112, 113, and a sensing application server 460 providing sensing-related services and/or generating sensing application data based on second stage sensing inference data 450 received from the sensing edge server 440 or from a plurality of sensing edge servers (a plurality of sensing edge servers is, however, not shown in the exemplary representation of Figure 4).

Hence, the functional elements involved according to the present invention comprise:
-- the sensing-capable or sensing-enabled entities or functionalities (or, sensing base stations) 111, 112, 113 with one or more mono-static sensing capable transmission and/or reception capabilities, TX/RX, especially antenna entities or functionalities and corresponding transmission and reception circuitry, wherein - especially in case of integrated communication and sensing, ICaS, sensing and communication is performed by the same base station HW (i.e. sensing-capable or sensing-enabled entities or functionalities 111, 112, 113;
-- sensing edge server 440 processing data from one or more sensing base stations 111, 112, 113;
-- sensing application server 460 realizing use case(s) based upon sensing detection data (second stage sensing inference data 450) received from the sensing edge server 440 with optional fusion of data from external sources (e.g. provided from dedicated stand-alone sensors - this is, however, not shown in Figure 4).

According to the present invention, in each function (i.e. at each stage) dedicated sensing data inference is carried out. A defined inference result is provided at the interfaces to the subsequent function.

Hence, Figure 4 shows the cascading of sensing data inference, i.e. the sensing-capable or sensing-enabled entities or functionalities 111, 112, 113 generate - from or based on the processing of radiofrequency sensing signals 420, 421, 422 - first stage sensing inference data 430, and provide these first stage sensing inference data 430 to the sensing edge server 440 (or to the plurality of sensing edge servers). Based on the first stage sensing inference data 430, the sensing edge server 440 generates second stage sensing inference data 450 and provides or transmits those to the sensing application server 460 in order for the sensing application server 460 to be able to provide sensing-related services and/or generate sensing application data. It is thereby advantageously possible, according to the present invention, to make use of the hierarchical and service-oriented architecture of the cellular mobile broadband network 100. Thereby, for each inference step best-of-bread methods can be applied. According to the present invention, it is especially preferred to use open interfaces
-- between the sensing-capable or sensing-enabled entities or functionalities 111, 112, 113 and the sensing edge server(s) 440, and/or
-- between the sensing edge server(s) 440 and the sensing application server (460).

According to the present invention, such cascading of sensing data inference especially provides the following benefits:
-- raw data inference can be carried out at the receivers in real time;
-- deep insights into radio specific functionalities are hidden;
-- the amount of data to be provided to the next inference step is limited;
-- cellular data fusion is supported when combining processed sensing data from relevant neighboring receivers;
-- open architecture allows reuse and optimization of cascading process;
-- application servers for specific use cases can build on generalized extracted insights provided by application programming interfaces, APIs.

Figure 5 schematically and exemplarily illustrates a possibility of first stage sensing inference data 430, especially as a radar-like image having multiple targets (schematically illustrated, in Figure 5, by means of circles or dots at different distances and at different angles from the sensing center), wherein exemplarily the optional possibility of a data element is exemplarily represented as a feature vector, especially for facilitating to process sensing data for object detection/localization/tracking use cases which is described in the following:
The sensing base station(s) 111, 112, 113 evaluate(s) sensing raw data based on RX measurements (i.e. measurements of the radiofrequency sensing reception signals), such as ToA, AoA, AoD, and Doppler from the various beams of, typically, massive multiple input multiple output, MIMO, antennas. Thereby, the specific dependencies on frequency bands, bandwidth, duplex scheme, reference signals etc. are considered.

Preferably according to the present invention, this result is provided (especially as part of first stage sensing inference data 430), especially in a radar-like image, and especially in a relative coordinate system; however, absolute coordinates could be applied or used here alternatively or cumulatively, though this is not required as long the sensing edge server 440 is able to derive absolute coordinates from relative results.

According to the present invention, these images (i.e. such first stage sensing inference data 430) are able to be a static and human-recognizable two-dimensional or three-dimensional image of the respective sensing base station's 111, 112, 113 coverage area. Preferably, such images are able to be enhanced with further information (feature vector, especially for facilitating to process sensing data for object detection/localization/tracking use cases) available during such local analysis at the sensing base station 111, 112, 113 (e.g. velocity indications from doppler measurements, range resolution, angular resolution, channel observations) to support subsequent (sensing-related) inferences. Time-sequencing of these static images to time-stamped image streams are able to provide the basis for object tracking.

Hence, a purely image-like representation of initial sensing inference by the sensing base station 111, 112, 113 (first stage sensing inference data 430) is able to be enhanced - or complemented -, according to the present invention, since the sensing base station 111, 112, 113 obtains several pieces of information from the sensing measurements; especially for each measurement element, the sensing base station 111, 112, 113 may provide a vector of features, i.e. an image element i (or a part i of the image - in Figure 5 represented by means of a square and the indication "Element i") may provide a feature vector xᵢ = [aᵢ, vᵢ, pᵢ], whereby, e.g., aᵢ describes the intensity of the received signal, vᵢ describes the relative velocity derived from doppler measurements and pᵢ the self-assessment of sensing base station's 111, 112, 113 inference accuracy/precision.

The relative location of this element i is, especially determined by ranging (range plus angle) by the sensing base station 111, 112, 113 - typically in its local coordinate system. The size of the element is mainly determined by the sensing base station's 111, 112, 113 ranging resolution and angular resolution (in Figure 5 and for the sake of simplification, element i is shown as a square (or: in rectangular shape) for illustration purposes; in real-world scenarios and implementations, the element shape will rather follow the shape of a circular sector or a sector-element shape). Hence, according to a preferred embodiment of the present invention, the sensing base station 111, 112, 113 may not provide a full "image", but only those elements with significant sensing information; however, in the following, it is referred to "images" and "image streams" for the sake of simplicity.

Figure 6 schematically and exemplarily illustrates inference steps performed in (or at) the sensing edge server 440: The sensing edge server **440** receives the radar-like images / image streams (or: first stage sensing inference data 430) from one or multiple sensing base stations 111, 112, 113 - especially periodically, (quasi-)continuously, or at specific points in time or on a subscription basis -, wherein Figure 6 exemplarily depicts the first and second sensing-related or sensing-enabled entities or functionalities 111, 112 providing first stage sensing inference data 430 to the sensing edge server 440. Especially by means of data fusion of these images and image streams, respectively, (i.e. of the first stage sensing inference data 430) into an absolute coordinate system and subsequent model- or Al/ML-based inference the sensing edge server **440** is able to derive results on:
-- object detection;
-- object identification (e.g., shape, material, body);
-- object localization (in absolute coordinate system), wherein this typically requires to know in advance the absolute position of base station antennas (i.e. of the sensing-capable or sensing-enabled entities or functionalities 111, 112, 113) and their orientations;
-- object tracking;
-- environment information (buildings, plants, etc.).

Preferably according to the present invention, this is realized by means of conducting a first sub-step (of the first step according to the present invention), during which the sensing edge server 440 performs a first inference step 441, and by means of conducting a second sub-step (of the first step according to the present invention), during which the sensing edge server 440 performs a second inference step 442; both sub-steps are schematically shown in Figure 6.

The first sub-step or first inference step 441 especially involves the preprocessed information obtained from the sensing base stations 111, 112, 113 (i.e. the first stage sensing inference data 430) being transformed from local information into a general coordinate system, thereby especially applying geographic coordinates (e.g. according to the world geodetic system 1984, WGS84) or specific cartesian coordinates valid for the specific area of investigation (for instance when applied for distinct indoor or outdoor campus areas). Thereby, the sensing edge server 440 may fuse input data from various sensing base stations 111, 112, 113 covering the same area.

The second sub-step or second inference step 442 especially involves the sensing edge server 440 identifying the various objects and providing object information, especially defined data on object-level (such as, e.g., "Object 1: {...}, Object 2: {...}, Object 3: {...}, Object 4: {...}"). These results are provided in a defined format (and corresponding to the second stage sensing inference data 450) by the sensing edge server **440** to the sensing application server 460, e.g. using a representation in a JSON formatted template for a single object.

Upon the data - i.e. the second stage sensing inference data 450 - being provided by the sensing edge server **440,** the sensing application server 460 can realize the individual use case application.

The sensing edge server **440** typically services sensing data (i.e. the second stage sensing inference data 450) in a generalized granularity, so that subsequent sensing application server 460 can support specific use cases.

Figures 7, 8 and 9 schematically and exemplarily illustrate different examples of the information exchange between the sensing edge server **440** and the (first) sensing-capable or sensing-enabled entity or functionality 111, when the first requests from the latter continuous mode (Figure 7), periodic mode (Figure 8) and one-shot request (Figure 9), respectively.

Figure 7 shows, in a first processing step 501 a request message transmitted by the sensing edge server **440** to the (first) sensing-capable or sensing-enabled entity or functionality 111, the request message requesting a stream (or a continuous mode) transmission. In subsequent second, third, fourth and fifth processing steps 502, 503, 504, 505, the (first) sensing-capable or sensing-enabled entity or functionality 111 transmits, respectively, sensing updates or sensing update messages. Hence, in this respect, the continuous mode corresponds to the sensing base station(s) 111 being able to continuously provide streams of sensing images, the sensing edge server **440** being able to continuously update object information.

Figure 8 shows, in a first processing step 511 a request message transmitted by the sensing edge server **440** to the (first) sensing-capable or sensing-enabled entity or functionality 111, the request message requesting a periodic update transmission (especially indicating a time interval or delta t information). In subsequent second, third, fourth and fifth processing steps 512, 513, 514, 515, the (first) sensing-capable or sensing-enabled entity or functionality 111 transmits, respectively, sensing updates or sensing update messages, especially after time intervals 516, 517, 518 corresponding to the indicated time interval or delta t information. Hence, in this respect, the periodic mode corresponds to the sensing edge server **440** periodically updates the sensing information. This periodicity is negotiated between the sensing edge server **440** and the (first) sensing-capable or sensing-enabled entity or functionality 111 and/or between the sensing edge server **440** and the sensing application server 460.

Figure 9 shows, in a first processing step 521 a request message transmitted by the sensing edge server **440** to the (first) sensing-capable or sensing-enabled entity or functionality 111, the request message requesting an update (or a one-shot) transmission. In a subsequent second processing step 522, the (first) sensing-capable or sensing-enabled entity or functionality 111 transmits a sensing update or sensing update message. Hence, in this respect, the one-shot request corresponds to the first stage sensing inference data 430 being transmitted once, especially due to the sensing application server 460 requesting one-time sensing information from the sensing edge server **440** (and, hence, the sensing edge server **440** requesting a one-time transmission from the (first) sensing-capable or sensing-enabled entity or functionality 111).

Figures 10, 11 and 12 schematically and exemplarily illustrate different examples of the information exchange and the interface between the sensing edge server **440** towards the sensing application server 460, showing different approaches, especially stream-based application programming interface (Figure 10), Pub/Sub application programming interface (Figure 11), and REST application programming interface (Figure 12), respectively.

Figure 10 shows, in a first processing step 601 a request message transmitted by the sensing application server 460 to the sensing edge server **440,** the request message requesting a continuous update mode transmission. In subsequent second, third and fourth processing steps 602, 603, 604, the sensing edge server **440** transmits, respectively, sensing information or sensing information messages to the sensing application server 460. In a fifth processing step 605, the sensing application server 460 requests from the sensing edge server **440** to stop the transmission of sensing information messages.

Figure 8 shows, in a first processing step 611 a request message transmitted by the sensing application server 460 to the sensing edge server **440,** the request message corresponding to a subscribe message in view of a publication/subscription mode transmission. In subsequent second, third and fourth processing steps 612, 613, 614, the sensing edge server **440** transmits, respectively, sensing information or sensing information messages to the sensing application server 460. In a fifth processing step 615, the sensing application server 460 requests from the sensing edge server **440** to stop the transmission of sensing information messages by means of an unsubscribe message.

Figure 9 shows, in a first processing step 621 a request message transmitted by the sensing application server 460 to the sensing edge server **440,** the request message corresponding to a GET message (especially comprising an area indication or area information) in view of a REST application programming interface mode transmission. In a subsequent second processing step 622, the sensing edge server 440 transmits a sensing response or sensing information message to the sensing application server 460.

Regarding all of these transmission modes between the sensing edge server 440 and the sensing application server 460, when triggering sensing inference, the sensing application server 460 requests from the sensing edge server 440 sensing detection information for a specific area or multiple areas of interest. As a result, the sensing edge server 440 prepares the object data according to this request.

An example of such data, provided by the sensing edge server 440, is given in the following:
Detected objects are identified by an identifier information - their object ID (objectld) generated by the sensing edge server 440 upon recognition of a new object and maintained as long as the respective object can be tracked:

```
 {
     "objectId": ...
     "timeStamp": ...
     "objectLocation": {
          "coordinateReferenceSystern : ...
          "latitude": ...
          "longitude": ...
          "elevation": ...
          "resolution": ...
          "precision": ...
     },
     "objectProperties": {
          "orientation": ...
          "speed": ...
          "objectShape": ...
          "surfaceType": ...
     },
          "objectEnvironment": {...}
 }
 
 {
 "areaList": [
          {
          "selectedArea": {...},
          "detectionList": [object1, object2, ... , objectN],
          "timeStamp": ...
          }, ...
     ]
 }
```

Hence, the interface of sensing edge server 440 towards sensing application server 460 can be realized in various ways. The different approaches may vary depending on the operation mode addressed, such as:
-- REST API: This is specifically beneficial for applications that use one-shot requests only.
-- Pub/Sub API: Publication-Subscribe methods may make use of WebSockets, MQTT or similar. This may be best suited for periodic mode operation.
-- Stream-based API: This may be best for continuous mode.

Other application interface methods may be applied that may evolve during definition of 6G systems.

Typically, it is up to the sensing edge server 440 which sensing operation mode (or transmission mode) and procedures it triggers towards the involved sensing base stations 111, 112, 113 upon requests from sensing application server(s) 460. For instance, more than one sensing application servers 460 may be subscribed to sensing information from one specific sensing area. Then it is up to the sensing edge server 440 to request continuous mode or periodic mode from the involved sensing base stations 111, 112, 113. In this sense, the sensing edge server determines also the set of sensing base stations required for sensing inference.

## Claims

1. Method for providing at least one sensing-related service by means of processing sensing-related data that is generated within or as part of a mobile communication network (100),
wherein the mobile communication network (100) comprises at least a first sensing-capable or sensing-enabled entity or functionality (111, 20) and a second sensing-capable or sensing-enabled entity or functionality (112, 21), wherein the at least one sensing-capable or sensing-enabled entity or functionality (111, 20) transmits a radiofrequency sensing signal (410), wherein, as a result of the radiofrequency sensing signal (410) being transmitted, a radiofrequency sensing reception signal (420) is received by either the first sensing-capable or sensing-enabled entity or functionality (111) or the second sensing-capable or sensing-enabled entity or functionality (112) or both, wherein by means of the radiofrequency sensing reception signal (420) information about the environment of the first and second sensing-capable or sensing-enabled entities or functionalities (111, 112) is able to be gathered as first stage sensing inference data (430),
wherein the mobile communication network (100) comprises or is associated or assigned to at least one sensing edge server (440) and at least one sensing application server (460),
**characterized in that**, in order to provide at least one sensing-related service, the method comprises the following steps:
-- in a first step, the first stage sensing inference data (430) are provided to the at least one sensing edge server (440), wherein the at least one sensing edge server (440) generates second stage sensing inference data (450), wherein, in a first sub-step of the first step, the sensing edge server (440) performs a first inference step (441), and wherein, in a second sub-step of the first step, the sensing edge server (440) performs a second inference step (442), wherein the second stage sensing inference data (450) correspond to the result of the second inference step (442), wherein the first inference step (441) involves data fusion of different first stage sensing inference data (430) provided by different sensing-capable or sensing-enabled entities or functionalities (111, 20, 112, 21) into a general coordinate system or into an absolute coordinate system, wherein the second inference step (442) involves the sensing edge server (440) identifying objects and providing object information,
-- in a second step, the second stage sensing inference data (450) are provided to the at least one sensing application server (460), wherein the at least one sensing application server (460) provides sensing-related services and/or generates sensing application data.

2. Method according to claim 1, wherein the first and second sensing-capable or sensing-enabled entities or functionalities (111, 20, 112, 21) use sensing raw data, especially based on radiofrequency transmission and/or reception measurements, especially time-of-arrival data, ToA data, angle-of-arrival data, AoA data, angle-of-departure data, AoD data, and/or doppler data, especially from the various beams of at least one massive multiple input multiple output, MIMO, antenna entity or functionality, wherein especially the first and second sensing-capable or sensing-enabled entities or functionalities (111, 20, 112, 21) are used for integrated communication and sensing, ICaS, and/or for joint communication and sensing, JCaS capabilities, and especially serve both communication purposes and sensing purposes.

3. Method according to one of the preceding claims, wherein the first stage sensing inference data (430) comprise at least one out of the following:
-- radar-like images, especially in a relative coordinate system,
-- elements with significant sensing information,
-- further information available during local analysis at the first and second sensing-capable or sensing-enabled entities or functionalities (111, 20, 112, 21), especially velocity indications, especially inferred from doppler measurements, range resolution, angular resolution, channel observations,
-- time-sequencing of static images, especially time-stamped image streams, especially of radar-like images,
-- a vector of features regarding at least a part of the radar-like images, the vector of features especially comprising data regarding
-- the intensity of the received signal,
-- the relative velocity derived from doppler measurements and/or
-- a self-assessment information regarding one or a plurality of the inferred properties based on the respective sensing-capable or sensing-enabled entity or functionality (111, 20, 112, 21).

4. Method according to one of the preceding claims, wherein the object information is defined data on object level, especially in a defined format, preferably using JavaScript Object Notation, JSON.

5. Method according to one of the preceding claims, wherein the second stage sensing inference data (450) are generated by means of at least one out of the following:
-- receiving different first stage sensing inference data (430) or streams of first stage sensing inference data (430),
-- model inference and/or artificial intelligence-based or machine learning-based inference such as to derive results on:
-- object detection,
-- object identification, especially the shape, the material and/or the body of the object,
-- object localization, especially in the absolute coordinate system,
-- object tracking,
-- environment information, especially regarding buildings or plants,
wherein especially, the second stage sensing inference data (450) comprise a generalized granularity.

6. Method according to one of the preceding claims, wherein the first stage sensing inference data (430) are transmitted, by the different sensing-capable or sensing-enabled entities or functionalities (111, 20, 112, 21), and received, by the sensing edge server (440) involving or according to at least one out of the following:
-- a continuous mode, wherein the sensing-capable or sensing-enabled entities or functionalities (111, 20, 112, 21) almost continuously provide streams of first stage sensing inference data (430), and the sensing edge server (440) is almost continuously able to update object information,
-- a periodic mode, wherein the sensing edge server (440) periodically updates the sensing information, wherein the periodicity is especially negotiated between the sensing-capable or sensing-enabled entities or functionalities (111, 20, 112, 21) and the sensing edge server (440),
-- a one-shot request, wherein the sensing edge server (440) requests one-time sensing information from the sensing-capable or sensing-enabled entities or functionalities (111, 20, 112, 21).

7. Method according to one of the preceding claims, wherein the second stage sensing inference data (450) are transmitted, by the sensing edge server (440), and received, by the sensing application server (460),
involving an application programming interface, especially according to at least one out of the following:
-- a representational state transfer, REST, application programming interface, especially in case that the sensing edge server (440) requests one-time sensing information from the sensing-capable or sensing-enabled entities or functionalities (111, 20, 112, 21),
-- a publication-subscription application programming interface, especially using WebSocket, MQ telemetry transport, MQTT, especially in case that the sensing edge server (440) and the sensing-capable or sensing-enabled entities or functionalities (111, 20, 112, 21) communicate according to the periodic mode operation,
-- a stream-based application programming interface, especially in case that the sensing edge server (440) and the sensing-capable or sensing-enabled entities or functionalities (111, 20, 112, 21) communicate according to the continuous mode operation.

8. System or mobile communication network (100) for providing at least one sensing-related service by means of processing sensing-related data that is generated within or as part of a mobile communication network (100), wherein the mobile communication network (100) comprises at least a first sensing-capable or sensing-enabled entity or functionality (111, 20) and a second sensing-capable or sensing-enabled entity or functionality (112, 21), wherein the at least one sensing-capable or sensing-enabled entity or functionality (111, 20) transmits a radiofrequency sensing signal (410), wherein, as a result of the radiofrequency sensing signal (410) being transmitted, a radiofrequency sensing reception signal (420) is received by either the first sensing-capable or sensing-enabled entity or functionality (111) or the second sensing-capable or sensing-enabled entity or functionality (112) or both, wherein by means of the radiofrequency sensing reception signal (420) information about the environment of the first and second sensing-capable or sensing-enabled entities or functionalities (111, 112) is able to be gathered as first stage sensing inference data (430),
wherein the mobile communication network (100) comprises or is associated or assigned to at least one sensing edge server (440 and at least one sensing application server (460),
**characterized in that**, in order to provide at least one sensing-related service, the system of mobile communication network (100) is configured such that:
-- the first stage sensing inference data (430) are provided to the at least one sensing edge server (440), wherein the at least one sensing edge server (440) generates second stage sensing inference data (450), wherein, in a first sub-step of the first step, the sensing edge server (440) performs a first inference step (441), and wherein, in a second sub-step of the first step, the sensing edge server (440) performs a second inference step (442), wherein the second stage sensing inference data (450) correspond to the result of the second inference step (442), wherein the first inference step (441) involves data fusion of different first stage sensing inference data (430) provided by different sensing-capable or sensing-enabled entities or functionalities (111, 20, 112, 21) into a general coordinate system or into an absolute coordinate system, wherein the second inference step (442) involves the sensing edge server (440) identifying objects and providing object information,
-- the second stage sensing inference data (450) are provided to the at least one sensing application server (460), wherein the at least one sensing application server (460) provides sensing-related services and/or generates sensing application data.

9. Sensing edge server (440), especially as part of a system or mobile communication network (100) according to claim 8, for providing at least one sensing-related service by means of processing sensing-related data that is generated within or as part of a mobile communication network (100), wherein the sensing edge server communicates with at least first and second sensing-capable or sensing-enabled entities or functionalities (111, 20, 112, 21), wherein the sensing-capable or sensing-enabled entities or functionalities (111, 20, 112, 21) gather information about their environment as first stage sensing inference data (430),
**characterized in that**, in order to provide at least one sensing-related service, the sensing edge server (440) is configured such that:
-- the first stage sensing inference data (430) are provided, by the sensing-capable or sensing-enabled entities or functionalities (111, 20, 112, 21), to the at least one sensing edge server (440), wherein the sensing edge server (440) generates second stage sensing inference data (450), wherein, in a first sub-step of the first step, the sensing edge server (440) performs a first inference step (441), and wherein, in a second sub-step of the first step, the sensing edge server (440) performs a second inference step (442), wherein the second stage sensing inference data (450) correspond to the result of the second inference step (442), wherein the first inference step **(441)** involves data fusion of different first stage sensing inference data (430) provided by different sensing-capable or sensing-enabled entities or functionalities (111, 20, 112, 21) into a general coordinate system or into an absolute coordinate system, wherein the second inference step (442) involves the sensing edge server (440) identifying objects and providing object information,
-- the second stage sensing inference data (450) are provided to the at least one sensing application server (460), wherein the at least one sensing application server (460) provides sensing-related services and/or generates sensing application data.

10. Program comprising a computer readable program code, which, when executed in part on first and second sensing-capable or sensing-enabled entities or functionalities (111, 20, 112, 21) and in part on a sensing edge server (440) and in part on a sensing application server (460), causes the first and second sensing-capable or sensing-enabled entities or functionalities (111, 20, 112, 21) and the sensing edge server (440) and the sensing application server (460) to perform a method according one of claims 1 to 7.

11. Computer-readable medium comprising instructions which when executed in part on first and second sensing-capable or sensing-enabled entities or functionalities (111, 20, 112, 21) and in part on a sensing edge server (440) and in part on a sensing application server (460), causes the first and second sensing-capable or sensing-enabled entities or functionalities (111, 20, 112, 21) and the sensing edge server (440) and the sensing application server (460) to perform a method according to one of claims 1 to 7.

## Patentansprüche

1. Verfahren zum Bereitstellen mindestens eines erfassungsbezogenen Dienstes mittels Verarbeiten erfassungsbezogener Daten, die innerhalb oder als Teil eines Mobilkommunikationsnetzes (100) generiert werden, wobei das Mobilkommunikationsnetz (100) mindestens eine erste erfassungsfähige oder erfassungsbefähigte Entität oder Funktionalität (111, 20) und eine zweite erfassungsfähige oder erfassungsbefähigte Entität oder Funktionalität (112, 21) umfasst, wobei die mindestens eine erfassungsfähige oder erfassungsbefähigte Entität oder Funktionalität (111, 20) ein Hochfrequenzerfassungssignal (410) sendet,
wobei, infolge des Sendens des Hochfrequenzerfassungssignals (410), ein Hochfrequenzerfassungsempfangssignal (420) durch entweder die erste erfassungsfähige oder erfassungsbefähigte Entität oder Funktionalität (111) oder die zweite erfassungsfähige oder erfassungsbefähigte Entität oder Funktionalität (112) oder beide empfangen wird, wobei mittels des Hochfrequenzerfassungssignals (420) Informationen über die Umgebung der ersten und zweiten erfassungsfähigen oder erfassungsbefähigten Entitäten oder Funktionalitäten (111, 112) als Erststufen-Erfassungsinferenzdaten (430) gesammelt werden können,
wobei das Mobilkommunikationsnetz (100) mindestens einen Erfassungs-Edge-Server (440) und mindestens einen Erfassungsanwendungsserver (460) umfasst oder mit diesen verknüpft oder ihnen zugewiesen ist,
**dadurch gekennzeichnet, dass** das Verfahren, um mindestens einen erfassungsbezogenen Dienst bereitzustellen, die folgenden Schritte umfasst:
- in einem ersten Schritt werden die Erststufen-Erfassungsinferenzdaten (430) dem mindestens einen Erfassungs-Edge-Server (440) bereitgestellt, wobei der mindestens eine Erfassungs-Edge-Server (440) Zweitstufen-Erfassungsinferenzdaten (450) generiert, wobei, in einem ersten Teilschritt des ersten Schrittes, der Erfassungs-Edge-Server (440) einen ersten Inferenzschritt (441) durchführt, und wobei, in einem zweiten Teilschritt des ersten Schrittes, der Erfassungs-Edge-Server (440) einen zweiten Inferenzschritt (442) durchführt, wobei die Zweitstufen-Erfassungsinferenzdaten (450) dem Ergebnis des zweiten Inferenzschrittes (442) entsprechen, wobei der erste Inferenzschritt (441) eine Datenfusion verschiedener Erststufen-Erfassungsinferenzdaten (430) impliziert, die durch verschiedene erfassungsfähige oder erfassungsbefähigte Entitäten oder Funktionalitäten (111, 20, 112, 21) in ein allgemeines Koordinatensystem oder in ein absolutes Koordinatensystem eingespeist werden, wobei der zweite Inferenzschritt (442) impliziert, dass der Erfassungs-Edge-Server (440) Objekte identifiziert und Objektinformationen bereitstellt,
- in einem zweiten Schritt werden die Zweitstufen-Erfassungsinferenzdaten (450) dem mindestens einen Erfassungsanwendungsserver (460) bereitgestellt, wobei der mindestens eine Erfassungsanwendungsserver (460) erfassungsbezogene Dienste bereitstellt und/oder Erfassungsanwendungsdaten generiert.

2. Verfahren nach Anspruch 1, wobei die ersten und zweiten erfassungsfähigen oder erfassungsbefähigten Entitäten oder Funktionalitäten (111, 20, 112, 21) Erfassungsrohdaten verwenden, die insbesondere auf Hochfrequenz-Sende- und/oder -Empfangsmessungen, insbesondere Ankunftszeitdaten (Time-of-Arrival, ToA-Daten), Ankunftswinkeldaten (Angle-of-Arrival, AoA-Daten), Abgangswinkeldaten (Angle-of-Departure, AoD-Daten) und/oder Dopplerdaten, basieren und insbesondere von den verschiedenen Strahlen mindestens einer massiven Multiple-Input-Multiple-Output (MIMO)-Antennenentität oder - funktionalität stammen, wobei insbesondere die ersten und zweiten erfassungsfähigen oder erfassungsbefähigten Entitäten oder Funktionalitäten (111, 20, 112, 21) für integrierte Kommunikations- und Erfassungsfähigkeiten (Integrated Communication and Sensing, ICaS-Fähigkeiten) und/oder für gemeinsame Kommunikations- und Erfassungsfähigkeiten (Joint Communication and Sensing, JCaS-Fähigkeiten) verwendet werden und insbesondere sowohl Kommunikationszwecken als auch Erfassungszwecken dienen.

3. Verfahren nach einem der vorangehenden Ansprüche, wobei die Erststufen-Erfassungsinferenzdaten (430) mindestens eines von Folgendem umfassen:
- radarartige Bilder, insbesondere in einem relativen Koordinatensystem,
- Elemente mit signifikanten Erfassungsinformationen,
- weitere Informationen, die während einer lokalen Analyse in den ersten und zweiten erfassungsfähigen oder erfassungsbefähigten Entitäten oder Funktionalitäten (111, 20, 112, 21) verfügbar sind, insbesondere Geschwindigkeitsangaben, insbesondere aus Dopplermessungen, Entfernungsauflösung, Winkelauflösung und Kanalbeobachtungen inferiert,
- Zeitsequenzierung von statischen Bildern, insbesondere zeitgestempelten Bild-Streams, insbesondere radarartigen Bildern,
- einen Vektor von Merkmalen bezüglich mindestens eines Teils der radarartigen Bilder, wobei der Vektor von Merkmalen insbesondere Daten umfasst bezüglich
- der Intensität des empfangenen Signals,
- der aus Dopplermessungen inferierten relativen Geschwindigkeit und/oder
- einer Selbstbeurteilungsinformation bezüglich einer oder mehrerer der inferierten Eigenschaften auf der Grundlage der jeweiligen erfassungsfähigen oder erfassungsbefähigten Entität oder Funktionalität (111, 20, 112, 21).

4. Verfahren nach einem der vorangehenden Ansprüche, wobei die Objektinformationen definierte Daten auf Objektebene sind, insbesondere in einem definierten Format, bevorzugt unter Verwendung von JavaScript Object Notation (JSON).

5. Verfahren nach einem der vorangehenden Ansprüche, wobei die Zweitstufen-Erfassungsinferenzdaten (450) mittels mindestens einem von Folgendem generiert werden:
- Empfangen verschiedener Erststufen-Erfassungsinferenzdaten (430) oder Streams von Erststufen-Erfassungsinferenzdaten (430),
- Modellinferenz und/oder auf künstlicher Intelligenz oder maschinellem Lernen basierende Inferenz, um zum Beispiel Ergebnisse abzuleiten über:
- Objektdetektion,
- Objektidentifikation, insbesondere der Form, des Materials und/oder des Körpers des Objekts,
- Objektlokalisierung, insbesondere in dem absoluten Koordinatensystem,
- Objektverfolgung,
- Umgebungsinformationen, insbesondere in Bezug auf Gebäude oder Pflanzen, wobei insbesondere die Zweitstufen-Erfassungsinferenzdaten (450) eine verallgemeinerte Granularität aufweisen.

6. Verfahren nach einem der vorangehenden Ansprüche, wobei die Erststufen-Erfassungsinferenzdaten (430) durch die verschiedenen erfassungsfähigen oder erfassungsbefähigten Entitäten oder Funktionalitäten (111, 20, 112, 21) gesendet und durch den Erfassungs-Edge-Server (440) empfangen werden, wobei mindestens eines von Folgendem impliziert oder gemäß mindestens einem von Folgendem verfahren wird:
- ein kontinuierlicher Modus, in dem die erfassungsfähigen oder erfassungsbefähigten Entitäten oder Funktionalitäten (111, 20, 112, 21) nahezu kontinuierlich Streams von Erststufen-Erfassungsinferenzdaten (430) bereitstellen und der Erfassungs-Edge-Server (440) nahezu kontinuierlich in der Lage ist, Objektinformationen zu aktualisieren,
- ein periodischer Modus, in dem der Erfassungs-Edge-Server (440) die Erfassungsinformationen periodisch aktualisiert, wobei die Periodizität insbesondere zwischen den erfassungsfähigen oder erfassungsbefähigten Entitäten oder Funktionalitäten (111, 20, 112, 21) und dem Erfassungs-Edge-Server (440) negoziiert wird,
- eine einmalige Anforderung, wobei der Erfassungs-Edge-Server (440) einmalige Erfassungsinformationen von den erfassungsfähigen oder erfassungsbefähigten Entitäten oder Funktionalitäten (111, 20, 112, 21) anfordert.

7. Verfahren nach einem der vorangehenden Ansprüche, wobei die Zweitstufen-Erfassungsinferenzdaten (450), unter Implizierung einer Anwendungsprogrammierschnittstelle, und insbesondere gemäß mindestens einem von Folgendem, durch den Erfassungs-Edge-Server (440) gesendet und durch den Erfassungsanwendungsserver (460) empfangen werden:
- eine Representational State Transfer (REST)-Anwendungsprogrammierschnittstelle, insbesondere in dem Fall, dass der Erfassungs-Edge-Server (440) einmalige Erfassungsinformationen von den erfassungsfähigen oder erfassungsbefähigten Entitäten oder Funktionalitäten (111, 20, 112, 21) anfordert,
- eine Publikations-Subskriptions-Anwendungsprogrammierschnittstelle, insbesondere unter Verwendung von WebSocket, MQ-Telemetrietransport (MQTT), insbesondere in dem Fall, dass der Erfassungs-Edge-Server (440) und die erfassungsfähigen oder erfassungsbefähigten Entitäten oder Funktionalitäten (111, 20, 112, 21) gemäß dem Betrieb im periodischen Modus kommunizieren,
- eine Stream-basierte Anwendungsprogrammierschnittstelle, insbesondere in dem Fall, dass der Erfassungs-Edge-Server (440) und die erfassungsfähigen oder erfassungsbefähigten Entitäten oder Funktionalitäten (111, 20, 112, 21) gemäß dem Betrieb im kontinuierlichen Modus kommunizieren.

8. System oder Mobilkommunikationsnetz (100) zum Bereitstellen mindestens eines erfassungsbezogenen Dienstes mittels Verarbeiten erfassungsbezogener Daten, die innerhalb oder als Teil eines Mobilkommunikationsnetzes (100) generiert werden,
wobei das Mobilkommunikationsnetz (100) mindestens eine erste erfassungsfähige oder erfassungsbefähigte Entität oder Funktionalität (111, 20) und eine zweite erfassungsfähige oder erfassungsbefähigte Entität oder Funktionalität (112, 21) umfasst, wobei die mindestens eine erfassungsfähige oder erfassungsbefähigte Entität oder Funktionalität (111, 20) ein Hochfrequenzerfassungssignal (410) sendet,
wobei, infolge des Sendens des Hochfrequenzerfassungssignals (410), ein Hochfrequenzerfassungsempfangssignal (420) durch entweder die erste erfassungsfähige oder erfassungsbefähigte Entität oder Funktionalität (111) oder die zweite erfassungsfähige oder erfassungsbefähigte Entität oder Funktionalität (112) oder beide empfangen wird, wobei mittels des Hochfrequenzerfassungssignals (420) Informationen über die Umgebung der ersten und zweiten erfassungsfähigen oder erfassungsbefähigten Entitäten oder Funktionalitäten (111, 112) als Erststufen-Erfassungsinferenzdaten (430) gesammelt werden können,
wobei das Mobilkommunikationsnetz (100) mindestens einen Erfassungs-Edge-Server (440) und mindestens einen Erfassungsanwendungsserver (460) umfasst oder mit diesen verknüpft oder ihnen zugewiesen ist,
**dadurch gekennzeichnet, dass** das System des Mobilkommunikationsnetzes (100), um mindestens einen erfassungsbezogenen Dienst bereitzustellen, so eingerichtet ist, dass:
- die Erststufen-Erfassungsinferenzdaten (430) dem mindestens einen Erfassungs-Edge-Server (440) bereitgestellt werden, wobei der mindestens eine Erfassungs-Edge-Server (440) Zweitstufen-Erfassungsinferenzdaten (450) generiert, wobei, in einem ersten Teilschritt des ersten Schrittes, der Erfassungs-Edge-Server (440) einen ersten Inferenzschritt (441) durchführt, und wobei, in einem zweiten Teilschritt des ersten Schrittes, der Erfassungs-Edge-Server (440) einen zweiten Inferenzschritt (442) durchführt, wobei die Zweitstufen-Erfassungsinferenzdaten (450) dem Ergebnis des zweiten Inferenzschrittes (442) entsprechen, wobei der erste Inferenzschritt (441) eine Datenfusion verschiedener Erststufen-Erfassungsinferenzdaten (430) impliziert, die durch verschiedene erfassungsfähige oder erfassungsbefähigte Entitäten oder Funktionalitäten (111, 20, 112, 21) in ein allgemeines Koordinatensystem oder in ein absolutes Koordinatensystem eingespeist werden, wobei der zweite Inferenzschritt (442) impliziert, dass der Erfassungs-Edge-Server (440) Objekte identifiziert und Objektinformationen bereitstellt,
- die Zweitstufen-Erfassungsinferenzdaten (450) werden dem mindestens einen Erfassungsanwendungsserver (460) bereitgestellt, wobei der mindestens eine Erfassungsanwendungsserver (460) erfassungsbezogene Dienste bereitstellt und/oder Erfassungsanwendungsdaten generiert.

9. Erfassungs-Edge-Server (440), insbesondere als Teil eines Systems oder Mobilkommunikationsnetzes (100) nach Anspruch 8, zum Bereitstellen mindestens eines erfassungsbezogenen Dienstes mittels Verarbeiten erfassungsbezogener Daten, die innerhalb oder als Teil eines Mobilkommunikationsnetzes (100) generiert werden,
wobei der Erfassungs-Edge-Server mit mindestens ersten und zweiten erfassungsfähigen oder erfassungsbefähigten Entitäten oder Funktionalitäten (111, 20, 112, 21) kommuniziert, wobei die erfassungsfähigen oder erfassungsbefähigten Entitäten oder Funktionalitäten (111, 20, 112, 21) Informationen über ihre Umgebung als Erststufen-Erfassungsinferenzdaten (430) sammeln,
**dadurch gekennzeichnet, dass** der Erfassungs-Edge-Server (440), um mindestens einen erfassungsbezogenen Dienst bereitzustellen, so eingerichtet ist, dass:
- die Erststufen-Erfassungsinferenzdaten (430) durch die erfassungsfähigen oder erfassungsbefähigten Entitäten oder Funktionalitäten (111, 20, 112, 21) dem mindestens einen Erfassungs-Edge-Server (440) bereitgestellt werden, wobei der mindestens eine Erfassungs-Edge-Server (440) Zweitstufen-Erfassungsinferenzdaten (450) generiert, wobei, in einem ersten Teilschritt des ersten Schrittes, der Erfassungs-Edge-Server (440) einen ersten Inferenzschritt (441) durchführt, und wobei, in einem zweiten Teilschritt des ersten Schrittes, der Erfassungs-Edge-Server (440) einen zweiten Inferenzschritt (442) durchführt, wobei die Zweitstufen-Erfassungsinferenzdaten (450) dem Ergebnis des zweiten Inferenzschrittes (442) entsprechen, wobei der erste Inferenzschritt (441) eine Datenfusion verschiedener Erststufen-Erfassungsinferenzdaten (430) impliziert, die durch verschiedene erfassungsfähige oder erfassungsbefähigte Entitäten oder Funktionalitäten (111, 20, 112, 21) in ein allgemeines Koordinatensystem oder in ein absolutes Koordinatensystem eingespeist werden, wobei der zweite Inferenzschritt (442) impliziert, dass der Erfassungs-Edge-Server (440) Objekte identifiziert und Objektinformationen bereitstellt,
- die Zweitstufen-Erfassungsinferenzdaten (450) werden dem mindestens einen Erfassungsanwendungsserver (460) bereitgestellt, wobei der mindestens eine Erfassungsanwendungsserver (460) erfassungsbezogene Dienste bereitstellt und/oder Erfassungsanwendungsdaten generiert.

10. Programm, umfassend einen computerlesbaren Programmcode, der, wenn er teilweise in ersten und zweiten erfassungsfähigen oder erfassungsbefähigten Entitäten oder Funktionalitäten (111, 20, 112, 21) und teilweise in einem Erfassungs-Edge-Server (440) und teilweise in einem Erfassungsanwendungsserver (460) ausgeführt wird, die ersten und zweiten erfassungsfähigen oder erfassungsbefähigten Entitäten oder Funktionalitäten (111, 20, 112, 21) und den Erfassungs-Edge-Server (440) und den Erfassungsanwendungsserver (460) veranlasst, ein Verfahren nach einem der Ansprüche 1 bis 7 durchzuführen.

11. Computerlesbares Medium, umfassend Instruktionen, die, wenn sie teilweise in ersten und zweiten erfassungsfähigen oder erfassungsbefähigten Entitäten oder Funktionalitäten (111, 20, 112, 21) und teilweise in einem Erfassungs-Edge-Server (440) und teilweise in einem Erfassungsanwendungsserver (460) ausgeführt werden, die ersten und zweiten erfassungsfähigen oder erfassungsbefähigten Entitäten oder Funktionalitäten (111, 20, 112, 21) und den Erfassungs-Edge-Server (440) und den Erfassungsanwendungsserver (460) veranlassen, ein Verfahren nach einem der Ansprüche 1 bis 7 durchzuführen.

## Revendications

1. Procédé destiné à fournir au moins un service lié à la détection au moyen d'un traitement de données liées à la détection qui sont générées dans un réseau de communication mobile (100) ou en tant que partie de celui-ci,
dans lequel le réseau de communication mobile (100) comprend au moins une première entité ou fonctionnalité capable de détection ou activée pour détection (111, 20) et une seconde entité ou fonctionnalité capable de détection ou activée pour détection (112, 21), dans lequel ladite au moins une entité ou fonctionnalité capable de détection ou activée pour détection (111, 20) transmet un signal de détection radiofréquence (410),
dans lequel, en résultat de la transmission du signal de détection radiofréquence (410), un signal de réception de détection radiofréquence (420) est reçu soit par la première entité ou fonctionnalité capable de détection ou activée pour détection (111) soit par la seconde entité ou fonctionnalité capable de détection ou activée pour détection (112), ou les deux, dans lequel au moyen du signal de réception de détection radiofréquence (420), des informations sur l'environnement des première et seconde entités ou fonctionnalités capables de détection ou activées pour détection (111, 112) peuvent être collectées en tant que données d'inférence de détection de première phase (430),
dans lequel le réseau de communication mobile (100) comprend ou est associé ou affecté à au moins un serveur de périphérie de détection (440) et à au moins un serveur d'applications de détection (460),
**caractérisé en ce que**, afin de fournir au moins un service lié à **la** détection, le procédé comprend les étapes suivantes :
- dans une première étape, les données d'inférence de détection de première phase (430) sont fournies au au moins un serveur de périphérie de détection (440), dans lequel **le** au moins un serveur de périphérie de détection (440) génère des données d'inférence de détection de seconde phase (450), dans lequel, dans une première sous-étape de **la** première étape, le serveur de périphérie de détection (440) réalise une première étape d'inférence (441), et dans lequel, dans une seconde sous-étape de **la** première étape, le serveur de périphérie de détection (400) réalise une seconde étape d'inférence (442), dans lequel les données d'inférence de détection de seconde phase (450) correspondent au résultat de **la** seconde étape d'inférence (442), dans lequel **la** première étape d'inférence (441) implique une fusion de données de différentes données d'inférence de détection de première phase (430) fournies par différentes entités ou fonctionnalités capables de détection ou activées pour détection (111, 20, 112, 21) dans un système de coordonnées générales ou dans un système de coordonnées absolues, dans lequel **la** seconde étape d'inférence (442) implique **le** serveur de périphérie de détection (440) identifiant des objets et fournissant des informations d'objets,
- dans une seconde étape, les données d'inférence de détection de seconde phase (450) sont fournies au au moins un serveur d'applications de détection (460), dans lequel le au moins un serveur d'applications de détection (460) fournit des services liés à la détection et/ou génère des données d'applications de détection.

2. Procédé selon la revendication 1, dans lequel les première et secondes entités ou fonctionnalités capables de détection ou activées pour détection (111, 20, 112, 21) utilisent des données brutes de détection, en particulier basées sur des mesures d'émission et/ou de réception radiofréquence, en particulier des données de temps d'arrivée (Time-of-Arrival, ToA), des données d'angle d'arrivée (Angle-of-Arrival, AoA), des données d'angle de départ (Angle-of-Departure, AoD), et/ou des données doppler, provenant en particulier des différents faisceaux d'au moins une entité ou fonctionnalité d'antenne à sorties multiples, entrées multiples (MIMO) massives, dans lequel les première et seconde entités ou fonctionnalités capables de détection ou activées pour détection (111,20, 112, 21) sont en particulier utilisées pour des capacités de communication et de détection intégrées (Integrated Communication and Sensing, IcaS) et/ou de communication et de détection conjointes (Joint Communication and Sensing, JcaS) et servent en particulier à la fois à des fins de communication et à des fins de détection.

3. Procédé selon l'une des revendications précédentes, dans lequel les données d'inférence de détection de première phase (430) comprennent au moins un parmi :
- des images radar, en particulier dans un système de coordonnées relatives,
- des éléments avec des informations sensibles significatives,
- des informations supplémentaires disponibles pendant une analyse locale au niveau des première et seconde entités ou fonctionnalités capables de détection ou activées pour détection (111, 20, 112, 21), en particulier des indications de vitesse, en particulier inférées par des mesures doppler, de résolution de portée, de résolution angulaire, d'observations de canaux,
- un séquençage temporel d'images statiques, en particulier des flux d'images horodatés, en particulier d'images du type radar,
- un vecteur de caractéristiques concernant au moins une partie des images du type radar, le vecteur de caractéristiques comprenant en particulier des données concernant
- l'intensité du signal reçu,
- la vitesse relative dérivée de mesures doppler et/ou
- une information d'auto-évaluation concernant une propriété ou une pluralité des propriétés inférées sur la base de l'entité ou de la fonctionnalité capable de détection ou activée pour détection (111, 20, 112, 21) respective.

4. Procédé selon l'une des revendications précédentes, dans lequel les informations d'objets sont des données définies au niveau de l'objet, en particulier dans un format défini, en utilisant de préférence JavaScript Object Notation (JavaScript Object Notation, JSON).

5. Procédé selon l'une des revendications précédentes, dans lequel les données d'inférence de détection de seconde phase (450) sont générées au moyen d'au moins un parmi :
- la réception de différentes données d'inférence de détection de première phase (430) ou de flux de données d'inférence de détection de première phase (430),
- une inférence de modèle et/ou une inférence basée sur l'intelligence artificielle ou basée sur l'apprentissage automatique, de manière à obtenir des résultats sur :
- la détection d'objet,
- l'identification d'objet, en particulier la forme, le matériau et/ou le corps de l'objet,
- la localisation d'objet, en particulier dans le système de coordonnées absolues,
- le suivi d'objet,
- les informations sur l'environnement, en particulier concernant des bâtiments ou des plantes, dans lequel les données d'inférence de détection de seconde phase (450) comprennent en particulier une granularité généralisée.

6. Procédé selon l'une des revendications précédentes, dans lequel les données d'inférence de détection de première phase (430) sont transmises par les différentes entités ou fonctionnalités capables de détection ou activées pour détection (111, 20, 112, 21) et reçues par le serveur de périphérie de détection (440) impliquant ou conformément à au moins un parmi :
- un mode continu, dans lequel les entités ou fonctionnalités capables de détection ou activées pour détection (111, 20, 112, 21) fournissent de façon quasiment continue des flux de données d'inférence de détection de première phase (430), et le serveur de périphérie de détection (440) est quasiment en continu capable de mettre à jour des informations d'objet,
- un mode périodique, dans lequel le serveur de périphérie de détection (440) met à jour périodiquement les informations de détection, dans lequel la périodicité est en particulier négociée entre les entités ou fonctionnalités capables de détection ou activées pour détection (111, 20, 112, 21) et le serveur de périphérie de détection (440),
- une requête ponctuelle, dans laquelle le serveur de périphérie de détection (440) demande des informations de détection ponctuelle aux entités ou fonctionnalités capables de détection ou activées pour détection (111, 20, 112, 21).

7. Procédé selon l'une des revendications précédentes, dans lequel les données d'inférence de détection de seconde phase (450) sont transmises par le serveur de périphérie de détection (440) et reçues par le serveur d'applications de détection (460) en impliquant une interface de programmation d'application, en particulier conformément à au moins un parmi :
- une interface de programmation d'application de transfert d'état représentatif (Representational State Transfer, REST) en particulier dans un cas où le serveur de périphérie de détection (440) demande des informations de détection ponctuelles aux entités ou fonctionnalités capables de détection ou activées pour détection (111,20, 112, 21),
- une interface de programmation d'application de publication-abonnement, utilisant en particulier le WebSocket, MQTT (MQ Telemetry Transport) en particulier dans un cas où le serveur de périphérie de détection (440) et les entités ou fonctionnalités capables de détection ou activées pour détection (111, 20, 112, 21) communiquent selon le fonctionnement en mode périodique,
- une interface de programmation d'application à base de flux, en particulier dans un cas où le serveur de périphérie de détection (440) et les entités ou fonctionnalités capables de détection ou activées pour détection (111, 20, 112, 21) communiquent selon le fonctionnement en mode continu.

8. Système ou réseau de communication mobile (100) destiné à fournir au moins un service lié à la détection au moyen d'un traitement de données liées à la détection qui sont générées dans un réseau de communication mobile (100) ou en tant que partie de celui-ci,
dans lequel le réseau de communication mobile (100) comprend au moins une première entité ou fonctionnalité capable de détection ou activée pour détection (111, 20) et une seconde entité ou fonctionnalité capable de détection ou activée pour détection (112, 21), dans lequel ladite au moins une entité ou fonctionnalité capable de détection ou activée pour détection (111, 20) transmet un signal de détection radiofréquence (410),
dans lequel, en résultat de la transmission du signal de détection radiofréquence (410), un signal de réception de détection radiofréquence (420) est reçu soit par la première entité ou fonctionnalité capable de détection ou activée pour détection (111) soit par la seconde entité ou fonctionnalité capable de détection ou activée pour détection (112), ou les deux, dans lequel au moyen du signal de réception de détection radiofréquence (420), des informations sur l'environnement des première et seconde entités ou fonctionnalités capables de détection ou activées pour détection (111, 112) peuvent être collectées en tant que données d'inférence de détection de première phase (430),
dans lequel le réseau de communication mobile (100) comprend ou est associé ou attribué à au moins un serveur de périphérie de détection (440) et à au moins un serveur d'applications de détection (460),
**caractérisé en ce que**, afin de fournir au moins un service lié à la détection, le système de réseau de communication mobile (100) est configuré de telle sorte que :
- les données d'inférence de détection de première phase (430) sont fournies au au moins un serveur de périphérie de détection (440), dans lequel le au moins un serveur de périphérie de détection (440) génère des données d'inférence de seconde phase (450), dans lequel, dans une première sous-étape de la première étape, le serveur de périphérie de détection (440) réalise une première étape d'inférence (441), et dans lequel, dans une seconde sous-étape de la première étape, le serveur de périphérie de détection (400) réalise une seconde étape d'inférence (442), dans lequel les données d'inférence de détection de seconde phase (450) correspondent au résultat de la seconde étape d'inférence (442), dans lequel la première étape d'inférence (441) implique une fusion de données de différentes données d'inférence de détection de première phase (430) fournies par différentes entités ou fonctionnalités capables de détection ou activées pour détection (111, 20, 112, 21) dans un système de coordonnées générales ou dans un système de coordonnées absolues, dans lequel la seconde étape d'inférence (442) implique le serveur de périphérie de détection (440) identifiant des objets et fournissant des informations d'objets,
- les données d'inférence de détection de seconde phase (450) sont fournies au au moins un serveur d'applications de détection (460), dans lequel le au moins un serveur d'applications de détection (460) fournit des services liés à la détection et/ou génère des données d'applications de détection.

9. Serveur de périphérie de détection (440), en particulier en tant que partie d'un système ou d'un réseau de communication mobile (100) selon la revendication 8, destiné à fournir au moins un service lié à la détection au moyen d'un traitement de données liées à la détection qui sont générées dans ou en tant que partie d'un réseau de communication mobile (100),
dans lequel le serveur de périphérie de détection communique avec au moins des première et seconde entités ou fonctionnalités capables de détection ou activées pour détection (111, 20, 112, 21), dans lequel les entités ou fonctionnalités capables de détection ou activées pour détection (111, 20, 112, 21) collectent des informations sur leur environnement en tant que données d'inférence de détection de première phase (430),
**caractérisé en ce que**, afin de fournir au moins un service lié à la détection, le serveur de périphérie de détection (440) est configuré de telle sorte que :
- les données d'inférence de détection de première phase (430) sont fournies, par les entités ou fonctionnalités capables de détection ou activées pour détection (111, 20, 112, 21), au au moins un serveur de périphérie de détection (440), dans lequel le au moins un serveur de périphérie de détection (440) génère des données d'inférence de seconde phase (450), dans lequel, dans une première sous-étape de la première étape, le serveur de périphérie de détection (440) réalise une première étape d'inférence (441), et dans lequel, dans une seconde sous-étape de la première étape, le serveur de périphérie de détection (400) réalise une seconde étape d'inférence (442), dans lequel les données d'inférence de détection de seconde phase (450) correspondent au résultat de la seconde étape d'inférence (442), dans lequel la première étape d'inférence (441) implique une fusion de données de différentes données d'inférence de détection de première phase (430) fournies par différentes entités ou fonctionnalités capables de détection ou activées pour détection (111, 20, 112, 21) dans un système de coordonnées générales ou dans un système de coordonnées absolues, dans lequel la seconde étape d'inférence (442) implique le serveur de périphérie de détection (440) identifiant des objets et fournissant des informations d'objets,
- les données d'inférence de détection de seconde phase (450) sont fournies au au moins un serveur d'applications de détection (460), dans lequel le au moins un serveur d'applications de détection (460) fournit des services liés à la détection et/ou génère des données d'applications de détection.

10. Programme comprenant un code de programme lisible par ordinateur qui, lorsqu'il est exécuté en partie sur des première et seconde entités ou fonctionnalités capables de détection ou activées pour détection (111, 20, 112, 21) et en partie sur un serveur de périphérie de détection (440) et en partie sur un serveur d'applications de détection (460), amène les première et seconde entités ou fonctionnalités capables de détection ou activées pour détection (111, 20, 112, 21) et le serveur de périphérie de détection (440) et le serveur d'applications de détection (460) à mettre en œuvre un procédé selon l'une des revendications 1 à 7.

11. Support lisible par ordinateur comprenant des instructions qui, lorsqu'elles sont exécutées en partie sur des première et seconde entités ou fonctionnalités capables de détection ou activées pour détection (111, 20, 112, 21) et en partie sur un serveur de périphérie de détection (440) et en partie sur un serveur d'applications de détection (460), amènent les première et seconde entités ou fonctionnalités capables de détection ou activées pour détection (111, 20, 112, 21) et le serveur de périphérie de détection (440) et le serveur d'application de détection (460) à mettre en œuvre un procédé selon l'une des revendications 1 à 7.
